# EUROPEAN PATENT APPLICATION

(11) **EP 1 253 456 A1**
(43) Date of publication of application: **30.10.2002**
(21) Application number: 02006806.0
(22) Date of filing: 25.03.2002
(51) Int. Cl.: G02B 7/00, G02B 6/34

(54) **System and method for adjusting the angular orientation of an optical filter and optical module including this system**

(30) Priority: 24.04.2001 JP 2001126750
(71) Applicant: The Furukawa Electric Co., Ltd., Tokyo 100-8322 (JP)
(72) Inventor: Nasu, Hideyuki, The Furukawa Electric Co., Ltd., Tokyo 100-8322 (JP)
(74) Representative: Zimmermann, Gerd Heinrich

(57) **Abstract**

A system for regulating an angular orientation of an optical filter (7), constructed in accordance with the present invention, comprising a coupling member (26) securely attached to the optical filter at one of ends thereof, a support member (27) securely attached to the other end of the optical filter and rotatably supported on a base member of a holder (20), an angle adjustment member (28) operatively associated with said coupling member and/or support member for rotating the optical filter about an axis of rotation on the base member so as to vary an angular orientation thereof relative to a light source, a controller (29) for controlling the angle of rotational of said angle adjustment member and thus the angular orientation of the optical filter in such a manner as to attain a desired incident angle of the light to the optical filter (7).

## Description

The present invention relates to a system and method for regulating an angular orientation of an optical filter by rotating the optical filter about its axis of rotation as well as an optical module for use therewith.

Traditionally, in the field of a dense wavelength division multiplexing (often, referred to as DWDM) optical communication system, long-term stability of wavelengths of optical signals are required for preventing deterioration of the optical signals. To comply with the requirement, there has been proposed an optical module having a package in which is contained a wavelength monitoring function.

The present invention intends to overcome the above problems. The object is solved by the system according to independent claim 1, the method according to independent claim 4 and the optical module according to independent claim 8.

Further advantages, features, aspects and details of the invention are evident from the dependent claims, the description and the accompanying drawings.

The present invention relates to a system and method for regulating an angular orientation of an optical filter by rotating the optical filter about its axis of rotation as well as an optical module for use therewith.

A system for regulating an angular orientation of an optical filter, constructed in accordance with the present invention, comprises a coupling member securely attached to the optical filter at one of ends thereof, a support member securely attached to the other end of the optical filter and rotatably supported on a base member of a holder, an angle adjustment member operatively associated with said coupling member and/or support member for rotating the optical filter about an axis of rotation on the base member so as to vary an angular orientation thereof relative to a light source, a controller for controlling the angle of rotational of said angle adjustment member and thus the angular orientation of the optical filter in such a manner as to attain a desired incident angle of the light to the optical filter.

The present invention also provides a method for regulating an angular orientation of an optical filter comprising the steps of;
providing an optical filter having one end to which a support member is fixedly attached and an opposite end to which a coupling member is fixedly attached, said optical filter being supported on a base member of a holder through said support member;

Attaching an angle adjustment member to said coupling member and rotating said angle adjustment member so as to rotate said optical filter about an axis of rotation on the base member.

The present invention further provides a optical module comprising an optical filter for transmitting light therethrough and a base member for mounting said optical filter thereon; characterized in that a support member is attached to said optical filter at one of ends thereof, a coupling member is attached to said optical filter at the other end thereof, said optical filter is mounted on said base member through said support member, and a coupling mechanism is provided for coupling said coupling member with an angle adjustment member associated with said optical filter for regulating an angular orientation of said optical filter.

The invention will be better understood by reference to the following description of embodiments of the invention taken in conjunction with the accompanying drawings, wherein
Fig. 1 (A) is a cross sectional side view of a system for adjusting an angular orientation of an optical filter, made in accordance with an embodiment of the present invention, and Fig. (B) is a plan view of the system, in particular showing a holder member and a coupling member associated with the holder member.
Fig. 2 is a cross sectional plan view of the holder member, showing an arrangement inside the holder member.
Figs. 3 (A), (B) and (C) shows various arrangements wherein an orientation adjusting member is attached to the coupling member.
Fig. 4 is a cross sectional plan view of an optical module incorporating the embodiment of the system according to the present invention.
Fig. 5 is a cross sectional side view of the optical module shown in Fig. 4.
Fig. 6 (A) is a plan view of the holder member prior to attachment thereof on a pedestal or base member of the optical module, and Fig. 6 (B) is a plan view of the holder member after attachment thereof to the module base.
Fig. 7 (A) is a schematic presentation illustrating a general construction of a prior art optical module with a wavelength monitor contained therein, Fig. 7 (B) is a plan view of a conventional arrangement for adjusting an angular orientation of the optical filter, and Fig. 7 (C) is a side view of the conventional arrangement shown in Fig. 7 (B).

Several embodiments of the present invention will now be described with reference to the drawings, as compared with a prior art arrangement.

One example of a conventional optical module with a wavelength monitor contained therein is disclosed Japanese Laid Open patent application No. 2000-56185.

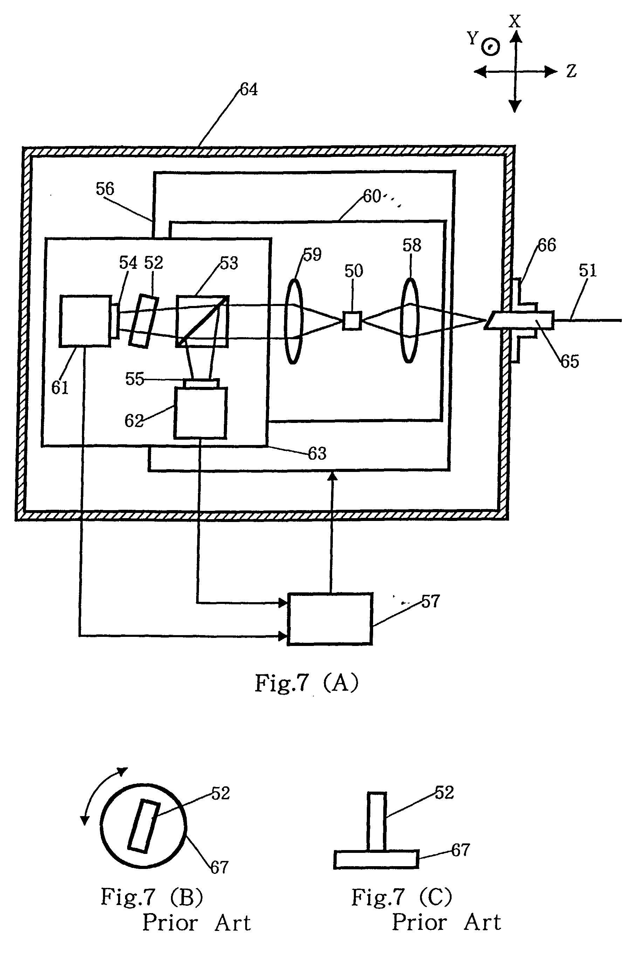

Fig. 7 (A) is a schematic representation of the conventional optical module. As shown, the optical module comprises a laser diode (LD) 50 for producing a laser light having a predetermined output or lasing wavelength, an optical fiber 51 optically coupled to the laser diode for receiving the laser light emanating from the forward end face of the laser diode 50 in a manner so as to provide an optical communication, a optical filter 52, which may be in the form of an etalon plate, having a cut off wavelength approximately equal to the lasing wavelength of the laser diode 50, a beam splitter 53 in the form of a half mirror for dividing the laser light emanating the rearward end face of the laser diode 50 into two portions, a first photodiode 54 for receiving one light portion which is divided by the beam splitter 53 and then transmitted through the optical filter 52 to produce a first PD current, a second photodiode 55 for receiving the other divided light portion from the beam splitter 53 to produce a second PD current, a Peltier device 56 for regulating an operating temperature of the laser diode 50, and a controller 57 for controlling the Peltier device in such a manner as to control the lasing wavelength of the laser diode 50 in response to the first and second PD currents generated by the first and second photodiodes 54 and 55, respectively.

Disposed between the laser diode 50 and the optical fiber 51 is a condenser lens 58 for condensing the laser light emanating from the forward end face of the laser diode 50. Disposed between the laser diode 50 and the beam splitter 53 is a collimator 59 for collimating the laser light emanating from the rearward end face of the laser diode 50.

The laser diode 50, condenser lens 58 and collimator lens 59 are fixedly mounted in tandem on a LD carrier 60. The first and second photodiodes 54 and 55 are fixedly mounted on first and second PD carriers 60, respectively.

The beam splitter 53, optical filter 52, and the first and second PD carriers 61 and 62 are fixedly mounted on a common metallic substrate 63 which is in turn located on the top surface of the LD carrier 60 which in turn securely mounted on the Peltier module 56.

The laser diode 50, beam splitter 53, optical filter 52, condenser lens 58, collimator leans 59, LD carrier 60, first and second PD carriers 61 and 62, metallic substrate 63 and Peltier module 56 are encapsulated in the package 64. A ferrule 65 is attached to the side wall of the package 64 through a sleeve 66 as clearly shown in Fig. 7 (A) and firmly receives the free end portion of the optical fiber 51 therethrough.

As can be seen, the laser light outputted from the forward end face of the laser diode 50 is condensed by the condenser lens 58 and then passed into the optical fiber at its end carried by the ferrule 65 for subsequent optical communication.

On the other hand, the laser light outputted from the rearward end face of the laser diode 50 is collimated by the condenser lens 59 and then impinge on the beam splitter 53 which divides the laser light into two portions, one being directed toward the Z-axis direction (i.e., a light transmission direction) and the other directed toward the X-axis direction (i.e., a light reflection direction). The light portion transmitted through the beam splitter 53 in the Z-axis direction is received by the first photodiode 54 while the light portion reflected by the beam splitter 53 in the X-axis direction is received by the second photodiode 55. As described above, the PD currents generated by the first and second photodiodes 54 and 55 are supplied to the controlling unit 57 which is operable to regulate the operating temperature of the Peltier module 56 so as to control the wavelength outputted from the laser diode 50.

As clearly shown in Figs. 7 (B) and (C), the conventional optical filter, e.g., an etalon plate 52 is disposed in an upstanding position and is secured at its bottom end to the top surface of a disk-like support member 67. The angular orientation of the etalon plate 52 can be adjusted by rotating the support 67 so as to change an angle at which the laser light becomes incident on the optical filter 52 in order to allow a broad range of wavelength to be monitored.

With the conventional arrangement as described, the optical filter 52 suffers from the instability of the rotational operation of the optical filter 52, which would make it difficult to provide an automated regulation of the angular orientation thereof.

In light of the drawbacks as mentioned above, the present invention provides a system and method for regulating an angular orientation of an optical filter by rotating the optical filter about its axis of rotation in a stable and positive manner. The present invention also provides an optical module incorporating the features of the present invention.

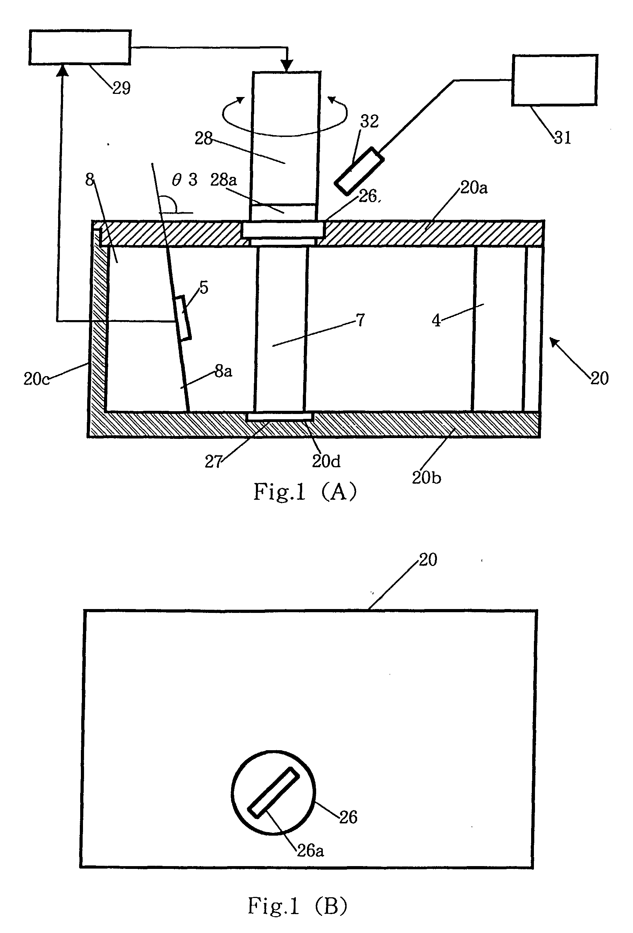

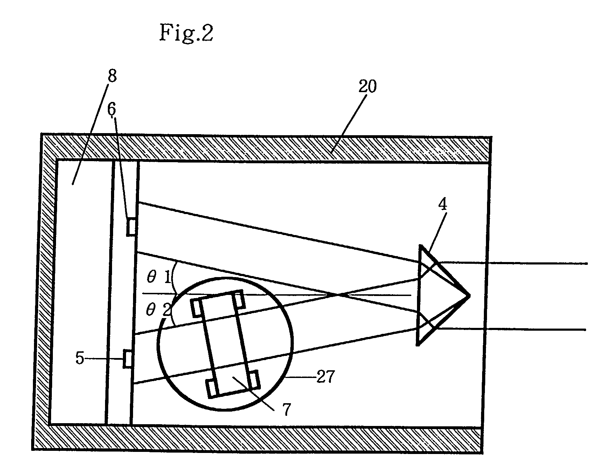

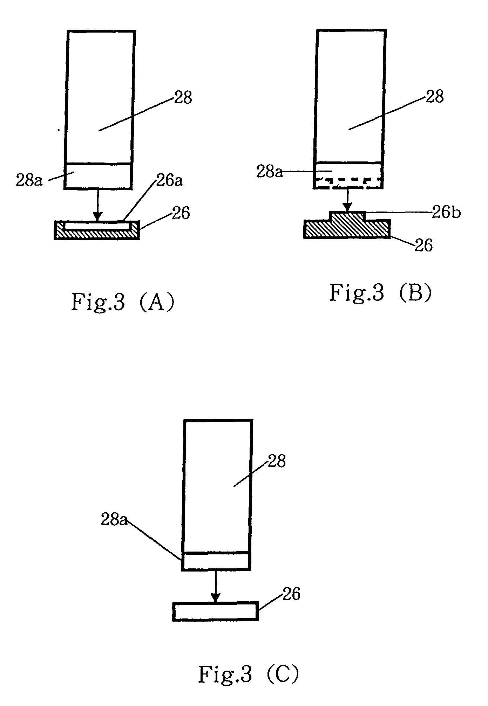

Fig. 1 (A) is a cross sectional side view of a system for adjusting an angular orientation of an optical filter, made in accordance with an embodiment of the present invention, and Fig. (B) is a plan view of the system, in particular showing a holder member and a coupling member associated with the holder member. Fig. 2 is a cross sectional plan view of the holder member, showing an arrangement inside the holder member. Figs. 3 (A), (B) and (C) shows various arrangements wherein an orientation adjusting member is attached to the coupling member.

As shown in Figs, 1 (A) and 1 (B), the optical module comprises a holder member 20 in the form of a hollow housing having a top plate 20a, a bottom plate 20b and side plates 20c, an adjuster for adjusting an angular orientation of the optical filter made in accordance with the present invention. The adjuster comprises a disk-like coupling member 26 rotatably received or fitted in a support hole located in the housing top plate 20a and operatively connected to the top end of an optical filter 7 located within the holder housing 20, a disk-like supporting member 27 secured to the bottom end of the optical filter 7 and rotatably received or fitted in a support recess 20d provided in the bottom plate 20b of the holder member 20, an angle adjustment member 28 associated with the coupling member 26 and operable to rotate the coupler 26 about its central axis of rotation, and a controller coupled to the angle adjustment member 28 for controlling the rotational angle of the operating member to adjust the angular orientation of the optical filter in a manner as to attain a desired incident angle of the laser light directed to the optical filter 7.

The angle adjustment member 28 comprises an elongated cylindrical member which is mounted for rotation about its longitudinal central axis and has a convexly shaped distal bottom end 28a.

Disposed within the holder member 20 are a prism 4 for dividing the laser light into first and second portions, the first and second portions being inclined at angles of θ 1 and θ 2 relative to the optical axis, respectively, which angles of θ 1 and θ 2 are less than 90° as shown in Fig. 2, a first photodiode 5 for receiving the first laser light portion from the prism 4, a second photodiode 6 for receiving the second light portion from the prism 4, and a PD carrier 8 for mounting the first and second photodiodes 5 and 6 on a common plane (a common mount face 8a in the case of the embodiment as shown).

The optical filter 7 can be composed of any of various types of etalons, for example a solid etalon and the like. The optical filter may be disposed between the first and second photodiodes 5 and 6 and operable to allow transmission therethrough of a laser light having a predetermined band of wavelengths.

The optical filter 7, the coupling member 26 and the support member 27 can be fixedly secured to each other, for example, by use of a glass material having a low melting point. With the bottom and side plates 20d and 20c of the holder member 20 assembled to each other, the optical filter 7 can be attached to the bottom plate 20b by fitting the support member 27 into the recess 20d of the bottom plate 20b. Thereafter, the top plate 20a is fixedly mounted on the side plates 20c so that the optical filter 11 is sandwiched between the top and bottom plates 20a and 20b of the holder member 20 for rotation therebetween.

The sides of the prism 4 are entirely coated with an antireflection film. Preferably, the angles θ 1 and θ 2 of the laser light portions divided by the prism 4 are substantially equal to each other (e.g., between 15 and 45 degrees). This is because the first and second photodiodes 5 and 6 can easily be positioned at a position suitable to receive the corresponding portions of the laser light.

The mount face 8a of the PD carrier 8 on which the first and second photodiodes 5 and 6 can be inclined at an angle of θ 3 greater than 90 degrees relative to the direction of the incident laser light (see Fig. 1). The angle θ 3 of the inclined mount face is preferably equal to or greater than 95 degrees for reducing the reflected returning light to establish satisfactory optical characteristics. Unacceptably large inclination of the mount face 8a relative to the incident direction of the laser light may lead to no PD current capable of being coupled to the photodiodes. Accordingly, it is preferable to reduce the inclined angle θ 3 to that equal to or smaller than 135 degrees so as to maintain less than 3 dB degradation of optical coupling efficiency. Thus, it is desirable adjust the inclined angle θ 3 of the mount face 8a so that it is between 95 degrees and 135 degrees.

As shown in Fig. 1(B), the upper surface of the coupling member 26 is exposed to the outside through the top plate 20a of the holder member 20 and is provided with a recessed groove 26a which is exposed to the outside. As shown, the angle adjustment member 28 is removably attached to the coupling member 26 with the tip end portion 28a of the angle adjustment member 28 engaged in the groove 26a of the coupling member 26, as shown in Fig. 3(A).

Numeral 31 designates a YAG laser irradiator 31 for fixing the optical filter 11 to the holder member 20 and numeral 32 designates a YAG laser head 32 attached to the tip end of the YAG laser irradiator 31.

With the arrangement of the system according to the embodiment of the present invention, the controller 29 is operable to rotate the angle adjustment member 28 and thus the optical filter 7 about the common axis of rotation so as to vary the angle at which the laser light is incident on the optical filter. The laser light which is transmitted through the optical filter 7, is directed onto the first photo diode which in turn provide the PD current to the controller 29. As can be appreciated by those skilled in the art, the controller 29 serves to rotate the optical filter 7 depending on the value of the output PD current of the first photodiode 5 to an angular orientation in which the desired wavelength characteristics can be obtained.

Due to the fact that the optical filter 7 is rotated about its fixed central axis of rotation through the angle adjustment member 28 with the optical filter 7 sandwiched between the angle adjustment member 28 and the bottom plate 20b of the holder member 20, not only a stabilized rotational movement, but also a desired angular orientation of the optical filter along with is attained, thus making it possible to regulate the desired angular orientation of the optical filter in an efficient and reliable manner.

Also, since the optical filter 7 is rotatably disposed between the bottom plate 20a and the top plate 20a of the holder member, a more stable rotational movement of the optical filter 7 can be provided.

In addition, since the angular orientation of the optical filter 7 can be adjusted remotely from the holder member 20, it becomes easy to adjust the angular orientation of the optical filter 7 even in a limited space.

An alternative example of a connection between the angle adjustment member 28 and the coupling member 26 is shown in Fig. 3(B). As shown, the coupling member 26 is provided at its top with a projection 26b. The angle adjustment member 28 is provided at its bottom with a corresponding a recessed groove 28a in which the projection 26a is adapted to be engaged. Further, as shown in Fig. 3(C), the angular orientation of the optical filter 7 may be adjusted by rotating the coupling member 26 with a magnetic force in such a state where the tip end surface of the angle adjustment member 28 is brought into surface contact with the upper surface of the filter holder 30, and an electric current is caused to flow to the tip end part 28a of the angle adjustment member 28 for magnetization. Still further, the coupling member 26 may be formed like a hexagonal nut and a complementary recess 26 may be formed in the angle adjustment member 28.

Alternatively, support member 27 may be rotated relative to the angle adjustment member 28. The angle adjustment member 28 may be divided into two sections, wherein the coupling member 26 and the supporting member 27 may be simultaneously rotated.

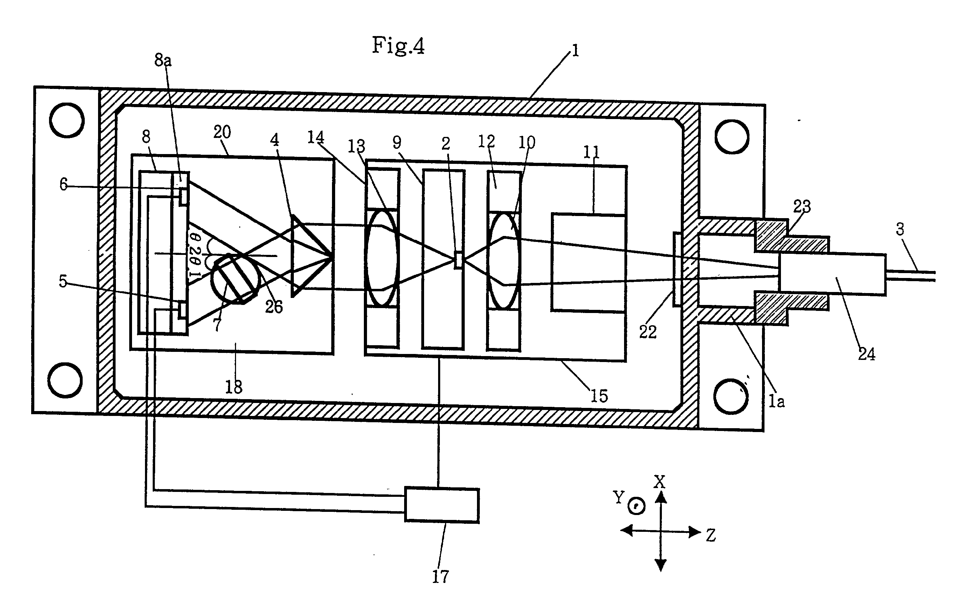

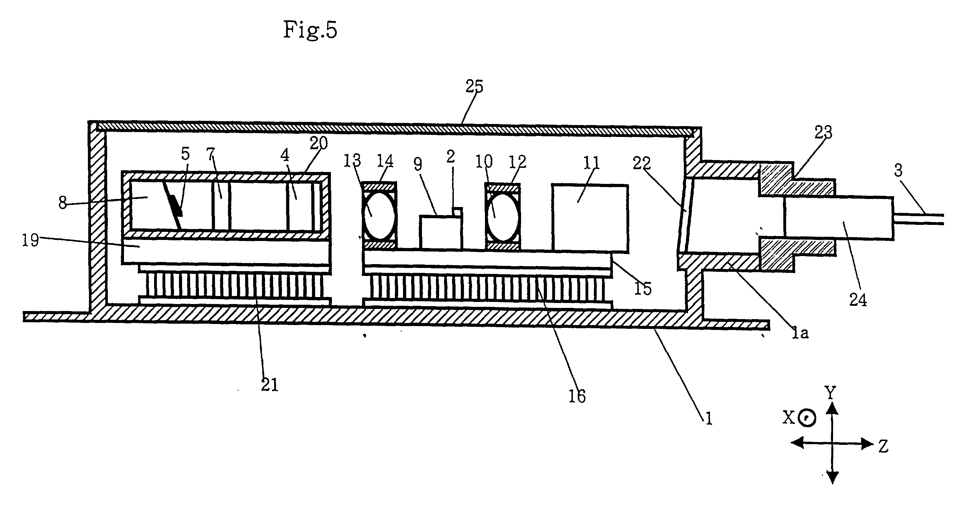

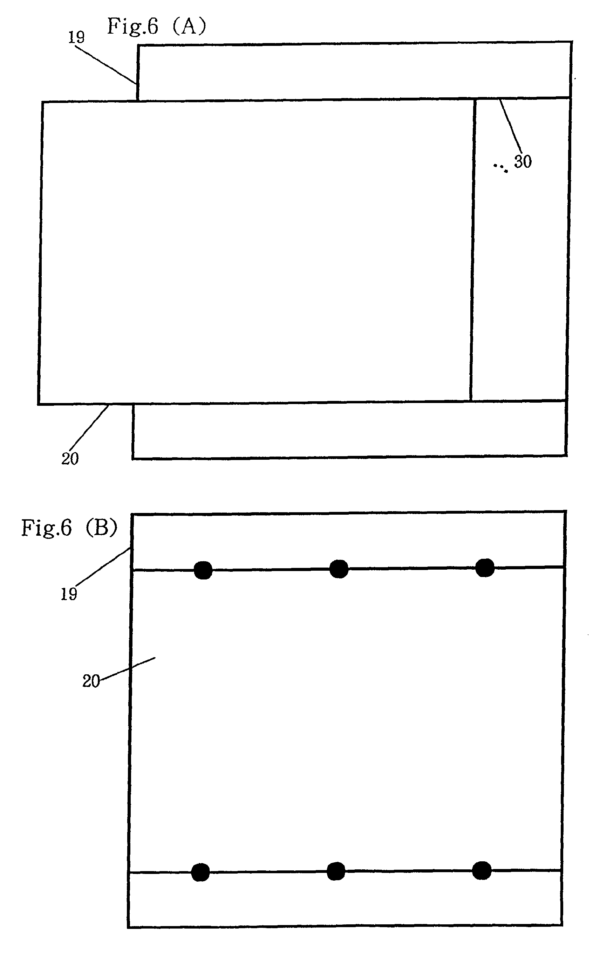

Fig. 4 is a cross sectional plan view of an optical module incorporating the embodiment of the system according to the present invention. Fig. 5 is a cross sectional side view of the optical module shown in Fig. 4. Fig. 6 (A) is a plan view of the holder member 20 prior to attachment thereof on a base member of the optical module, and Fig. 6 (B) is a plan view of the holder member 20 after attachment thereof to the module base.

As shown in Figs. 4 and 5, the optical module comprises a hermetically sealed package 1, a semiconductor laser device (light-emitting element) 2 disposed within the package 1 for emitting a laser light, an optical fiber 3 optically coupled to the semiconductor laser device 2 for receiving the laser light emanating from the forward (to the right as viewed in Fig. 4) end face thereof for optical communication, and the holder member 20 as described above in which the prism 4, the optical filter 7 and the PD carrier 8 are enclosed.

The semiconductor laser device 2 is fixedly mounted on a LD carrier 9. Disposed between the semiconductor laser device 2 and the optical fiber 3 is a condenser lens 10 for condensing the laser light emanating from the forward end face of the semiconductor laser device 2 and optically coupling it to the optical fiber 3, together with an optical isolator 11 for preventing the laser light from returning from the side of the optical fiber 3 to the semiconductor laser device 2. It is noted that the condenser lens 10 is held by a first annular lens holder 12.

Disposed between the semiconductor laser device 2 and the prism 4 in the housing 20 is a collimator lens 13 for collimating the laser light emanating from the rearward end face of the semiconductor laser device 2. It is also noted that the collimator lens 13 is held by a second annular lens holder 14.

The LD carrier 9, the optical isolator 11, and the first and second lens holders 12 and 14 are fixedly mounted on the first pedestal or base member 15 in the package 1. Returning to Fig. 2, the first base member 15 is fixedly attached to a first cooling device 16 for rejecting heat generated by the semiconductor laser device 2. The cooling device comprises a Peltier module in this embodiment.

From the first and second photodiodes 5 and 6, respectively, first and second PD currents are fed to a controller 17 which serves to control the first cooling device 16 in response to the first and second PD currents so as to regulate the wavelength of the laser light generated by the semiconductor laser device 2.

The holder member 20 is fixedly mounted on the second pedestal or base member 19 which in turn is locate on a second cooling device 21 in the form of a Peltier module. The second cooling device 21 can be controlled to maintain a temperature sensed by a thermistor (not shown) positioned within the holder member 20 uniform.

The package 1 is provided at its side with a window 22 onto which the laser light is directed after passing through the optical isolator 11. The package 1 is formed at its side with a flange 1a having an end face to which a metallic sleeve 23 is secured by YAG laser welding.

The tip end of the optical fiber 3 is held by a ferrule 24 which is in turn fixedly attached to the inside wall of the sleeve 23 by YAG laser welding.

The open top of the package 1 is covered with a closure 25 (see Fig. 5) whose peripheral edge portion is laser welded to the package 1 to hermetically seal the interior of the package.

The laser light emanating from the forward end face of the semiconductor laser device 2 is condensed by the condenser lens 10 and passed to the optical isolator 11 through the window 22, into the optical fiber 3 firmly held by the ferrule 24 for optical communication.

On the other hand, the laser light emanating from the rearward end face of the semiconductor laser device 2 is collimated by the collimator lens 13 and impinges on the prism 4 in the holder member 20 that divides the laser light into the two portions (first and second portions), the first and second portions being oppositely inclined at angles of θ 1 and θ 2 relative to the optical axis, respectively. The first light portion reflected by the prism 4 enters the optical filter 7 which can transmit, therethrough the laser light having the selected band of the wavelengths that is then received by the first photodiode 5. The second laser light portion is received by the second photodiode 6. From the first and second photodiodes 5 and 6, respectively, first and second PD currents are fed to the controller 17 which serves to control the first cooling device 16 in response to the first and second PD currents so as to regulate the wavelength of the laser light generated by the semiconductor laser device.

Description of a method for producing the optical module will now be given. First, the LD carrier 9 with the semiconductor laser element 2 attached thereto, the optical isolator 11, the first lens holder 12 and the second lens holder 14 are secured to the first base 15 by soldering.

Subsequently, the holder member 20 is secured to the second base 19 by soldering so that the laser light for monitoring, which is outputted from the rearward end face of the semiconductor laser element 2 is incident to the prism 4 in the holder member 20 at a desired angle.

Next, as shown in Fig. 1, the angle adjustment member 28 and thus the optical filter 7 are rotated so as to vary the incident angle of the laser light to the optical filter 7 which transmits the predetermined wavelength of the laser light and send it to the photodiode 5. The controller 29 monitors the wavelength characteristics on the basis of the value of the PD current outputted from the first photodiode 5 that has received laser light for monitoring, which has been outputted from the rearward end surface of the semiconductor laser element 2.

Then, in response the monitored results, the optical filter 7 is secured by the YAG laser welding operation to the holder member 20 at a position in which the desired wavelength characteristics can be obtained (that is, the lock-point of a wavelength). In this case, the welded point is situated on the boundary portion between the supporting member 27 and/or the coupling member 26 and the holder member 20. In view of the YAG laser weldability, it is preferable that the coupling member 26 and supporting member 27 are made of a material such as KOVAR™ that provide an excellent thermal conductivity.

Next, as shown in Fig. 4, the X, Y and Z axes of the optical fiber 3 are coordinated so that the output of the laser beam, which is outputted from the forward end surface of the semiconductor laser element 2 is maximized. Then, after the ferrule 24 that holds the tip end part of the optical fiber 3 is secured by the YAG laser welding to the inside surface of the sleeve 23, a metal-made sleeve 23 is secured the YAG laser welding to the end surface of the flange portion 1a on the side of the package 1.

Finally, the cover or lid 25 is placed over the open top of the package 1 and the peripheral part of the cover is secured thereto by the YAG laser welding to hermetically seal the inside of the package 1.

Also, as shown in Fig. 6(A), a groove 30 may be formed in the pedestal 19 so that the holder member 20 is adjusted by passive alignment, and the holder member 20 may be inserted while matching its side to the groove 30, whereby the alignment process can be simplified. After the holder member 20 is inserted into the groove 30, a YAG laser light is directed onto the contacting portion, as shown in Fig. 6(B) and then laser welding is carried out to complete the securement of the holder member 20 to the base 19 of the package 1. Also, such securement using soldering, an adhesive agent as well as laser welding is contemplated.

The present invention is not limited to the above embodiments, but it may be subjected to various modifications without departing from the scope of the invention as claimed in the appended claims. For example, the optical filter 7 may be disposed between the prism 4 and the second photodiode 6. In this case, two angle adjustment members can be utilized. The system for regulating an angular orientation of an optical filter according to the embodiments of the invention may be used for other various uses than that of a wavelength monitoring means of optical signals, and may be used in processes of producing optical modules other than the optical modules shown in Fig. 4 and Fig. 5.

Also, the second base 19 may carry the optical filter 7. No recess in the pedestal is required to receive the support member 27. By way of example, the support member 27 can be located on a flat surface. The top plate 20a is not necessarily required. The coupling member 26 and supporting member 27 may be integrally formed with each other.

## Claims

1. A system for regulating an angular orientation of an optical filter (7) comprising;
a coupling member (26) securely attached to the optical filter at one of ends thereof;
a support member (27) securely attached to the other end of the optical filter and rotatably supported on a base member of a holder;
an angle adjustment member (28) operatively associated with said coupling member and/or support member for rotating the optical filter about an axis of rotation on the base member so as to vary an angular orientation thereof relative to a light source;
a controller (29) for controlling the angle of rotational of said angle adjustment member and thus the angular orientation of the optical filter in such a manner as to attain a desired incident angle of the light to the optical filter.

2. The system according to claim 1, wherein said optical filter is sandwiched between said base member and a top member of the holder (20).

3. The system according to any of the preceding claims further comprising a light receiving element (5) for receiving the light transmitted through said optical filter, said controller monitoring the wavelength of the light on the basis of an amount of current generated by said light receiving element and controlling said angle adjustment member to rotate the optical filter (7) to a position providing a desired wavelength characteristic.

4. A method for regulating an angular orientation of an optical filter comprising the steps of;
providing an optical filter having one end to which a support member is fixedly attached and an opposite end to which a coupling member is fixedly attached, said optical filter being supported on a base member of a holder through said support member;
attaching an angle adjustment member to said coupling member and rotating said angle adjustment member so as to rotate said optical filter about an axis of rotation on the base member.

5. The method according to claim 4, wherein said optical filter is rotated with said optical filter sandwiched between said base member and a top member of the holder.

6. The method according to any of claims 4 to 5, wherein said optical filter is rotated so as to provide a predetermined wavelength characteristic of the light transmitted therethrough.

7. The method according to any of claims 4 to 6 wherein the optical filter is fixedly mounted on said base member with the optical filter remaining its angular orientation obtained after said rotation thereof.

8. A optical module comprising an optical filter (7) for transmitting light therethrough and a base member for mounting said optical filter thereon; **characterized in that** a support member (27) is attached to said optical filter at one of ends thereof, a coupling member (26) is attached to said optical filter at the other end thereof, said optical filter is mounted on said base member through said support member, and a coupling mechanism is provided for coupling said coupling member with an angle adjustment member (28) associated with said optical filter for regulating an angular orientation of said optical filter.

9. The optical module according to claim 8, further comprising a semiconductor laser device (2) producing said light and a light receiving element (5) for receiving the light transmitted through said optical filter.
